# EUROPEAN PATENT APPLICATION

(11) **EP 2 175 576 A2**
(43) Date of publication of application: **14.04.2010**
(21) Application number: 09164860.0
(22) Date of filing: 08.07.2009
(51) Int. Cl.: H04H 20/26, H04H 40/90

(54) **Satellite terminal and communication link transition method performed by the same**

(30) Priority: 07.10.2008 KR 20080098374
(71) Applicant: Electronics and Telecommunications Research Institute, Daejon-si 305-350 (KR)
(72) Inventor: Ryu, Joon-gyu, Daejeon-si (KR); Shin, Min-su, Daejeon-si (KR); Chang, Dae-ig, Daejeon-si (KR); Lee, Ho-jin, Daejeon-si (KR)
(74) Representative: Betten & Resch

(57) **Abstract**

A method of performing a communication link transition performed by a satellite terminal is provided. The method includes scanning a gap filler link signal during satellite broadcasting and communication through a satellite link, receiving the gap filler link signal as a result of the scanning, determining whether or not the received gap filler link signal satisfies requirements, and performing a communication transition from a satellite link to a gap filler link when the requirements are determined to be satisfied. Accordingly, bi-directional satellite broadcasting and communication services can be provided in a shadow region, such as a tunnel, without interruption.

## Description

### CROSS-REFERENCE TO RELATED APPLICATION

This application claims the benefit under 35 U.S.C. §119(a) of Korean Patent Application No. 10-2008-98374, filed on October 7, 2008, the disclosure of which is incorporated herein in its entirety by reference.

### BACKGROUND

### 1. Field

The following description relates to satellite broadcasting and communication technology, and more particularly, to technology for realizing satellite broadcasting and communication services in a shadow region without interruption.

This work was partly supported by the IT R&D program of MIC/IITA [2006-S-020-03, Development of Satellite and Terrestrial Convergence Technology for Internet Service on HighSpeed Mobile vehicles].

### 2. Description of the Related Art

Conventionally, satellite communications could only be performed when line of sight (LOS) was ensured. Recently, satellite broadcasting, including satellite digital multimedia broadcasting (DMB), has employed gap filter technology such that a satellite DMB terminal can receive the satellite broadcasting in a non-LOS (NLOS) environment. However, gap filler technology to overcome the NLOS environment has not been introduced at all in bi-directional satellite communications.

### SUMMARY

The following description relates to technology enabling satellite broadcasting and communication services to be provided in a shadow region, in particular in a railway tunnel, without interruption. More particularly, the following description relates to technology enabling bi-directional satellite communications to be provided in a shadow region.

According to an exemplary aspect, there is provided a link transition method performed by a satellite terminal, including scanning a gap filler link signal during satellite broadcasting and communication through a satellite link, receiving the gap filler link signal as a result of the scanning, determining whether or not the received gap filler link signal satisfies requirements, and performing a communication transition from a satellite link to a gap filler link when the requirements are determined to be satisfied.

The scanning of the gap filler link signal may include receiving current position coordinates during the satellite broadcasting and communication through the satellite link and scanning a gap filler link signal when the received position coordinates are designated coordinates.

The determining of whether or not the received gap filler link signal may satisfies requirements may include estimating a signal to noise ratio of the received gap filler link signal; and determining whether or not the estimated signal to noise ratio is equal to or higher than a critical value.

The performing of the communication transition may include synchronizing a gap filler link signal packet with a satellite link signal packet and performing a communication transition from a satellite link to a gap filler link after the synchronization.

The performing of the communication transition may include activating a function of generating a pilot to be sent to a gap filler.

The method may further include detecting a satellite link signal during the transition to the gap filler link, estimating a signal to noise ratio of the detected satellite link signal determining whether or not the detected satellite link signal is equal to or higher than a critical value, performing a communication transition from a gap filler link to a satellite link when the determined results are equal to or higher than the critical value, and deactivating the function of generating a pilot after the communication transition to the satellite link.

According to another exemplary aspect, there is provided a satellite terminal, including a satellite receiver receiving a satellite signal transmitted from a satellite, a gap filler receiver receiving a gap filler signal transmitted from the satellite receiver and band-converted by a gap filler, and a controller activating the gap filler receiver during satellite broadcasting and communication in which the satellite receiver receives a satellite signal to scan a gap filler link signal, and performing a communication transition to a gap filter link when a signal to noise ratio of the gap filter link signal received as a result of the scanning is equal to or higher than a critical value.

Additional aspects of the invention will be set forth in the description which follows, and in part will be apparent from the description, or may be learned by practice of the invention.

It is to be understood that both the foregoing general description and the following detailed description are exemplary and explanatory and are intended to provide further explanation of the invention as claimed.

### BRIEF DESCRIPTION OF THE DRAWINGS

FIG. 1 illustrates a distribution example of a satellite signal and a gap filler signal at an entrance and an exit of a railway tunnel.
FIG. 2 illustrates variables that are to be taken into account for a transition between a satellite link and a gap filler link,
FIG. 3 is a flowchart illustrating a transition from a satellite link to a gap filler link, which is performed by a satellite terminal, according to an exemplary embodiment.
FIG. 4 is a flowchart illustrating a transition from a gap filler link to a satellite link, which is performed by a satellite terminal, according to an exemplary embodiment.
FIG. 5 is a block diagram of a satellite terminal according to an exemplary embodiment.

Elements, features, and structures are denoted by the same reference numerals throughout the drawings and the detailed description, and the size and proportions of some elements may be exaggerated in the drawings for clarity and convenience.

### DETAILED DESCRIPTION

The invention is described more fully hereinafter with reference to the accompanying drawings, in which exemplary embodiments of the invention are shown, This invention may, however, be embodied in many different forms and should not be construed as limited to the exemplary embodiments set forth herein, Rather, these exemplary embodiments are provided so that this disclosure is thorough, and will fully convey the scope of the invention to those skilled in the art. In the drawings, the sizes and relative sizes of layers and regions may be exaggerated for clarity. Like reference numerals in the drawings denote like elements,

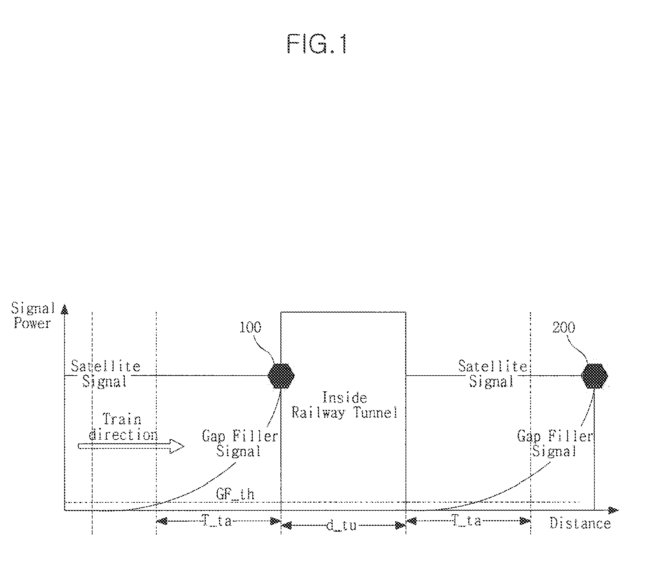

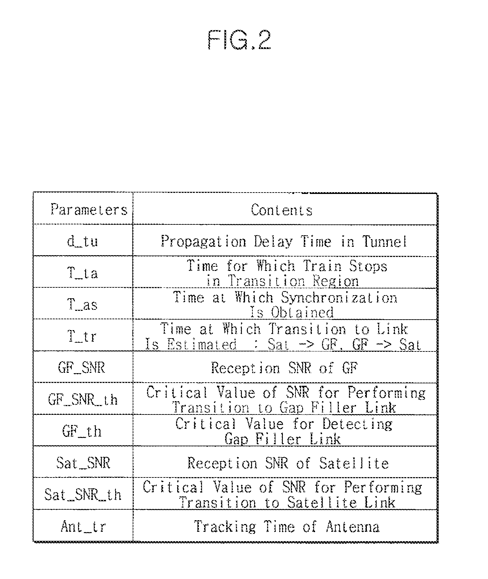

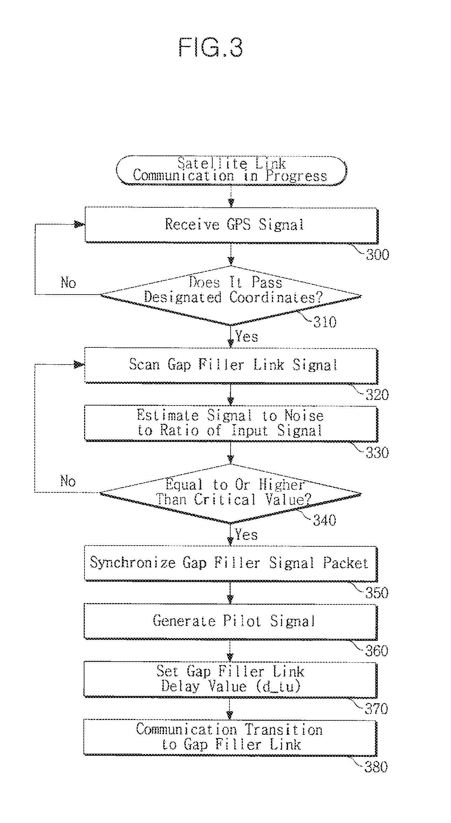

FIG. 1 illustrates a distribution example of a satellite signal and a gap filler signal at an entrance and an exit of a railway tunnel, FIG. 2 illustrates variables that are to be taken into account for a transition between a satellite link and a gap filler link, and FIG. 3 is a flowchart illustrating a transition from a satellite link to a gap filler link, which is performed by a satellite terminal, according to an exemplary embodiment.

The satellite terminal according to an exemplary embodiment is installed in a train and provides passengers with bi-directional satellite digital multimedia broadcasting services. This may, for example, refer to a satellite digital audio broadcasting (DAB) or satellite digital multimedia broadcasting (DMB) terminal. Here, the satellite terminal is not necessarily installed in the train, but may be a personal satellite terminal that a passenger possesses.

In addition, as illustrated in FIG. 1, a gap filler (GF) 100 is installed at a tunnel entrance in the direction of the train. Further, although not illustrated, a plurality of gap fillers are installed in the tunnel at predetermined intervals, Also, a gap filler 200 is installed at a predetermined distance from a tunnel exit. These gap fillers function to modulate a time division multivision (TDM) signal in a Ku band or Ka band that a broadcasting satellite sends towards the ground to a code division multiplexing (CDM) signal of 2.6 GHz (S band) so that the satellite terminal receives the signal.

A communication transition performed by the satellite terminal from a satellite link to a gap filler link will be explained below. When a global positioning system (GPS) module is mounted on the satellite terminal, the satellite terminal receives a GPS signal during satellite link communications (operation 300). When current position coordinates confirmed by the GPS signal are within the range of set coordinates, i.e., a train passes through a location corresponding to designated coordinates, the satellite terminal scans a gap filler link signal (operations 310 and 320). When a GPS module is not mounted on the satellite terminal, the satellite terminal continuously scans the gap filler link signal during the satellite link communications,

Since the train moves towards the tunnel, a signal sent by the gap filler 100 installed at the tunnel entrance may be input. When the signal input from the gap filler 100 is GF_th or higher, a signal to noise ratio (GF_SNR) is estimated (operation 330). GF_SNR obtained while estimating the signal to noise ratio is compared with GF_SNR-th to determine whether or not GF_SNR is equal to or higher than GF_SNR_th (operation 340). When GF_SNR is equal to or higher than GF_SNR_th, a communication transition from the current satellite link state to a gap filler link state is performed (operation 380). That is, the satellite link is released.

Prior to performing the communication transition from the satellite link to the gap filler link, the following processes may be additionally performed. A received gap filler signal packet is synchronized with a satellite signal packet (operation 350). This is because gap filler relay causes a delay in reception to occur in the gap filler link, and thus when a communication transition to the gap filler link is performed without synchronization, a part of the received packet may be destroyed.

Additionally, a function of generating a pilot is activated (operation 360). Activating the function of the pilot is limited to a case in which the satellite terminal operates in a burst mode. This is because signal power is weak for the gap filler to perform auto gain control (AGC) on a burst signal transmitted to a return link when the satellite terminal operates in the burst mode. Therefore, a tone pilot is generated to enable the gap filler to perform the AGC on the burst signal transmitted from the satellite terminal.

Furthermore, a gap filler delay value d_tu is set, so that a transmission signal is transmitted as early as the value of d_tu (operation 370). Taking into account a transmission delay time d_tu that is increased by the gap filler, the satellite terminal transmits the burst signal as early as the value of d_tu in the tunnel, so that network synchronization may be maintained. Here, the value of d_tu that is equivalent to a value delayed in the tunnel may vary per tunnel depending on the length of a tunnel. Therefore, the value of d_tu may be set differently for each tunnel. For example, the value of d_tu may be set differently by identifying tunnels that the current train is to pass using coordinate information of the current position received from the GPS module.

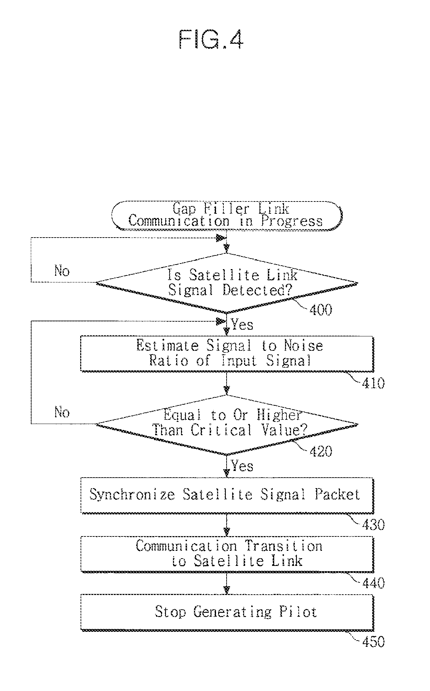

FIG. 4 is a flowchart illustrating a transition from a gap filler link to a satellite link, which is performed by a satellite terminal, according to an exemplary embodiment. Whether or not a satellite link signal is detected is confirmed during gap filler link communications (operation 400). That is, whether or not the train has emerged from the tunnel is detected. When antenna "Tracking ON" information is received from a satellite antenna during the gap filler link communications, a signal to noise ratio (Sat_SNR) of a signal input from the satellite link is estimated (operation 410).

Sat_SNR that is obtained while estimating the signal to noise is compared with Sat_SNR_th, and whether or not Sat_SNR is equal to or higher than Sat_SNR_th is determined (operation 420), When Sat_SNR is equal to or higher than Sat_SNR_th, a received satellite signal packet is synchronized with a gap filler signal packet, and then a communication transition from the current gap filler link to the satellite link is performed (operations 430 and 440). That is, the gap filler link is released. Moreover, the function of generating a pilot, which is required and activated during the gap filler link communications, is deactivated (operation 450).

Meanwhile, the gap filler 200 may be installed at a proper location such that the communication transition from the gap filler link to the satellite link is performed without interruption. In installing the gap filler 200 at the proper location, a tracking time Ant_tr of a satellite antenna, a link transition time T_tr, a packet synchronization time T_as, and a time for which a train stops in a transition region may be taken into account.

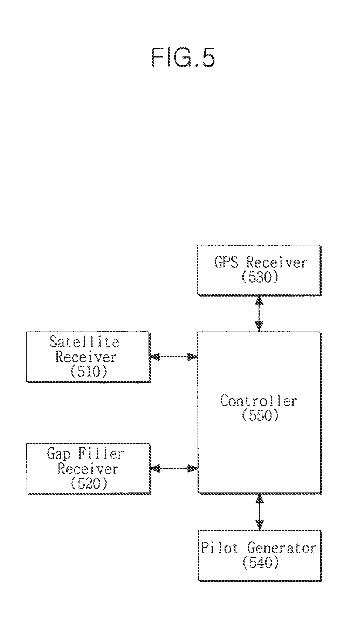

FIG. 5 is a block diagram of a satellite terminal according to an exemplary embodiment.

A satellite receiver 510 receives a satellite signal in a Ku or Ka band transmitted from a broadcasting satellite. A gap filter receiver 520 receives a gap filter signal that the broadcasting satellite transmits and the gap filler converts its band, A GPS receiver 530 receives coordinate information of a current position transmitted from a GPS satellite. A pilot generator 540 generates a pilot signal to transmit the generated results to the outside.

When the current position coordinates received and confirmed by the GPS receiver 530 are within the range of previously set coordinates, a controller 550 activates the gap filler receiver 520 to scan a gap filler link signal. When the satellite terminal does not include the GPS receiver 530, the controller 550 maintains the gap filler receiver 520 to be constantly activated, so that the gap filler link signal is continuously scanned.

The controller 550 estimates a signal to noise ratio of a gap filter signal that the gap filler receiver 520 receives depending on the scanning of the gap filler link signal, and determines whether or not the estimated signal to noise ratio GF_SNR is equal to or higher than a critical value GF_SNR_th. When the estimated value is equal to or higher than the critical value, the controller 550 synchronizes a received gap filler link signal packet with a satellite link signal packet. Further, in a burst mode, the pilot generator 540 is activated, a gap filler link delay value d_tu is set, and then a communication transition from a current satellite link to a gap filler link is performed.

Afterwards, during the gap filler link communications, the controller 550 detects whether or not the satellite receiver 510 receives a satellite signal. When the satellite signal is received, the controller 550 estimates a signal to noise ratio of the received satellite signal, and determines whether or not the estimated signal to noise ratio Sat_SNR is equal to or higher than a critical value Sat_SNR_th. When the determined results are equal to or higher than the critical value, the controller 550 synchronizes a received satellite link signal packet with a gap filler link signal packet, and then a communication transition from a current gap filler link to a satellite link is performed. Then, the activated pilot generator 540 is deactivated.

As apparent from the above description, when a satellite terminal installed in an express train is used to provide bi-directional multimedia services to passengers in the train, services may be provided without interruption in a shadow region, such as a tunnel, through a communication transition from a satellite link to a gap filler link.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.

## Claims

1. A link transition method performed by a satellite terminal, comprising:
scanning a gap filler link signal during satellite broadcasting and communication through a satellite link;
receiving the gap filler link signal as a result of the scanning;
determining whether or not the received gap filter link signal satisfies requirements; and
performing a communication transition from a satellite link to a gap filler link when the requirements are determined to be satisfied.

2. The method of claim 1, wherein the scanning of the gap filler link signal comprises:
receiving current position coordinates during the satellite broadcasting and communication through the satellite link; and
scanning a gap filler link signal when the received position coordinates are designated coordinates.

3. The method of claim 1, wherein the determining of whether or not the received gap filter link signal satisfies requirements comprises:
estimating a signal to noise ratio of the received gap filler link signal; and
determining whether or not the estimated signal to noise ratio is equal to or higher than a critical value,

4. The method of claim 1, wherein the performing of the communication transition comprises:
synchronizing a gap filler link signal packet with a satellite link signal packet; and
performing a communication transition from a satellite link to a gap filler link after the synchronization.

5. The method of claim 4, wherein the performing of the communication transition comprises setting a delay value of a gap filler link such that a signal to be sent is sent as early as a propagation delay time considering a propagation delay time of a signal through the gap filler link before performing a communication transition to the gap filter link.

6. The method of claim 4, wherein the performing of the communication transition comprises activating a function of generating a pilot to be sent to a gap filler.

7. The method of claim 1, further comprising:
detecting a satellite link signal during the transition to the gap filler link;
determining whether or not the detected satellite link signal is equal to or higher than a critical value; and
performing a communication transition from a gap filler link to a satellite link when the determined results are equal to or higher than the critical value.

8. The method of claim 7, wherein the determining of whether or not the detected satellite link signal is equal to or higher than a critical value comprises:
estimating a signal to noise ratio of the detected satellite link signa!; and
determining whether or not the estimated signal to noise ratio of the satellite link signal is equal to or higher than a critical value.

9. The method of claim 7, wherein the performing of the communication transition to the satellite link comprises:
synchronizing a satellite link signal packet with a gap filler link signal packet; and
performing a communication transition from a gap filler link to a satellite link after the synchronization.

10. The method of claim 4, further comprising:
detecting a satellite link signal during the transition to the gap filler link;
estimating a signal to noise ratio of the detected satellite link signal;
determining whether or not the detected satellite link signal is equal to or higher than a critical value;
performing a communication transition from a gap filter link to a satellite link when the determined results are equal to or higher than the critical value; and
deactivating the function of generating a pilot after the communication transition to the satellite link.

11. A satellite terminal, comprising:
a satellite receiver receiving a satellite signal transmitted from a satellite;
a gap filler receiver receiving a gap filler signal transmitted from the satellite receiver and band-converted by a gap filler; and
a controller activating the gap filler receiver during satellite broadcasting and communication in which the satellite receiver receives a satellite signal to scan a gap filler link signal, and performing a communication transition to a gap filler link when a signal to noise ratio of the gap filler link signal received as a result of the scanning is equal to or higher than a critical value.

12. The satellite terminal of claim 11, further comprising a global positioning system (GPS) receiver receiving current position coordinate information from a GPS satellite,
wherein the controller activates the gap filler receiver when current position coordinates received from the GPS receiver are designated coordinates.

13. The satellite terminal of claim 11, further comprising a pilot generator generating a pilot to be transmitted to a gap filler,
wherein the controller activates the pilot generator, and performs a communication transition to a gap filter link.

14. The satellite terminal of claim 11, wherein the controller determines whether or not a signal to noise ratio of the satellite link signal received through the satellite receiver during the transition to the gap filler link is equal to or higher than a critical value, and when the determined results are equal to or higher than the critical value, performs a communication transition to a satellite link.

15. The satellite terminal of claim 13, wherein the controller deactivates the pilot generator when a transition to a satellite link is performed again during the communication transition to the gap filler link.
